Europäisches Patentamt

European Patent Office

Office européen des brevets

(11) Veröffentlichungsnummer : **0 048 820**
**B1**

(12) **EUROPÄISCHE PATENTSCHRIFT**

(45) Veröffentlichungstag der Patentschrift :
30.01.85

(21) Anmeldenummer : 81106669.5

(22) Anmeldetag : 27.08.81

(51) Int. Cl.⁴ : **G 06 F   7/02**

(54) **Binäre MOS-Parallel-Komparatoren.**

(30) Priorität : 25.09.80 DE 3036065

(43) Veröffentlichungstag der Anmeldung :
07.04.82 Patentblatt 82/14

(45) Bekanntmachung des Hinweises auf die Patenterteilung : 30.01.85 Patentblatt 85/05

(84) Benannte Vertragsstaaten :
**DE FR GB IT NL**

(56) Entgegenhaltungen :
**DE-A- 2 529 094**
**DE-A- 2 647 982**
**FR-A- 2 296 966**
**US-A- 3 604 944**
**US-A- 4 031 511**
**SIEMENS   RESEARCH   AND   DEVELOPMENT REPORTS, Band 5, Nr. 6, November 1976, Seiten 324-326, Berlin, DE.**

(73) Patentinhaber : **Deutsche ITT Industries GmbH**
**Hans-Bunte-Strasse 19 Postfach 840**
**D-7800 Freiburg (DE)**
**DE**
**ITT INDUSTRIES INC.**
**320 Park Avenue**
**New York, NY 10022 (US)**
**FR GB IT NL**

(72) Erfinder : **Schmidtpott, Friedrich, Ing.-grad.**
**Gewerbestrasse 34**
**D-7803 Gundelfingen (DE)**
Erfinder : **Backes, Reiner, Dipl.-Ing.**
**Kehler Strasse 42**
**D-7800 Freiburg (DE)**

(74) Vertreter : **Stutzer, Gerhard, Dr.**
**Deutsche ITT Industries GmbH Patent- und Lizenzabteilung Hans-Bunte-Strasse 19 Postfach 840**
**D-7800 Freiburg (DE)**

## Beschreibung

Die Erfindung betrifft binäre MOS-Parallel-Komparatoren entsprechend den Oberbegriffen der Ansprüche 1 und 2. In dem Buch von A. Shah et al « Integrierte Schaltungen in digitalen Systemen », Band 2, Basel 1977, Seiten 129 bis 143 sind verschiedene Arten von Parallel-Komparatoren beschrieben. Zwei dieser Arten sind der auf Seite 136 a. a. O. erläuterte Parallel-Komparator mit durchgeschlungenem Übertrag (im Englischen mit « ripple carry » bezeichnet) und der auf den Seiten 140 und 141 beschriebene Parallel-Komparator mit im voraus bestimmten Übertrag (im Englischen mit « carry look ahead » bezeichnet). Die Angaben im genannten Buch gehen von den handelsüblichen integrierten Bipolar-Schaltungen aus und beschreiben die Parallel-Komparatoren anhand von Blockschaltbildern, in denen die üblichen logischen Grundglieder verwendet werden, also UND-, ODER-, NAND-, NOR-, Äquivalenz- und Antivalenz-Glieder sowie Inverterstufen.

Eine direkte Übertragung der anhand der erwähnten integrierten Bipolar-Schaltungen erläuterten Grundprinzipien der bekannten Parallel-Komparatoren auf mittels Isolierschicht-Feldeffekttransistoren zu integrierende Schaltungen, also auf die sogenannten MOS-Schaltungen, ist nicht ohne weiteres möglich, da die MOS-Schaltungstechnik z. T. erheblich von der Bipolar-Schaltungstechnik abweicht.

Es ist daher die Aufgabe der Erfindung, ausgehend von dem eingangs erwähnten Stand der Technik Parallel-Komparatoren zur Realisierung in MOS-Technik anzugeben. Dabei soll insbesondere ein Schaltungsaufbau der einzelnen parallelzuschaltenden Stufen geschaffen werden, der die Realisierung auch für große Wortlängen (15 bis 30 Bit) bei vertretbarem Aufwand ermöglicht und für derart große Wortlängen eine hohe Rechengeschwindigkeit gewährleistet. Der Schaltungsaufwand pro Stufe soll also möglichst gering sein, so daß die auf dem Halbleiterkörper der integrierten Schaltung zur Verfügung stehende Fläche aufgrund der geringen Zellenfläche einer Parallel-Komparator-Stufe möglichst optimal ausgenutzt werden kann.

Diese Aufgabe wird mit den Mitteln der Kennzeichenteile der Ansprüche 1 und 2 gelöst ; eine vorteilhafte Ausgestaltung der Lösungsvariante nach Anspruch 1 ist in Anspruch 5 und vorteilhafte Ausgestaltungen der Lösungsvariante nach Anspruch 2 sind in den Ansprüchen 3 und 4 gekennzeichnet.

Ausführungsbeispiele der Erfindung werden nun anhand der Figuren der Zeichnung näher erläutert.

Figur 1 zeigt das Schaltbild einer Ausführungsform der ersten Lösungsvariante,

Figur 2 zeigt das Schaltbild einer Ausführungsform der zweiten Lösungsvariante,

Figur 3 zeigt das Schaltbild einer Ausgestaltung der Anordnung nach Fig. 2, und

Figur 4 zeigt eine Variante der Anordnung nach Fig. 2.

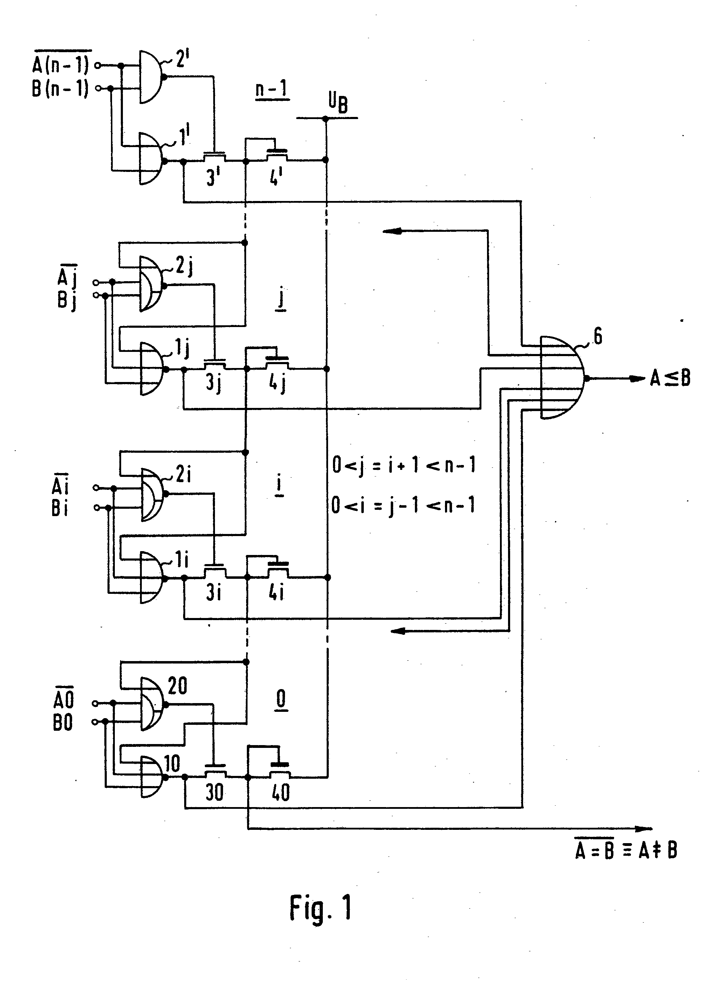

Das in Fig. 1 gezeigte Schaltbild einer Ausführungsform des Gegenstands des Anspruchs 1 zeigt von den n möglichen Stufen dieses MOS-Parallel-Komparators die niederste Stufe 0 mit der Wertigkeit $2^0$, die aufeinanderfolgenden Stufen i, j, wobei j demzufolge $= i + 1$ ist, und die höchste Stufe n − 1 mit der Wertigkeit $2^{n-1}$. Der Aufbau der höchsten Stufe n − 1 weicht von dem der übrigen Stufen geringfügig ab, worauf unten noch näher eingegangen wird.

Die Stufen 0, i, j bestehen jeweils aus dem ersten NOR-Glied 10, 1i, 1j, dem Komplexgatter 20, 2i, 2j, dem Transfertransistor 30, 3i, 3j und dem Lasttransistor 40, 4i, 4j. In der Stufe i und entsprechend auch in den Stufen 0 und j sind dem ersten und dem zweiten Eingang des NOR-Glieds 1i die Eingangssignale $\overline{Ai}$, Bi zugeführt, und der dritte Eingang des NOR-Glieds 1i liegt am Verbindungspunkt des mit seinem gesteuerten Strompfad mit dem des Lasttransistors 4j in Serie geschalteten Transfertransistors 3j der nächsthöheren Stufe j.

Das Komplexgatter 2i besteht aus einer UND-Verknüpfung, deren beiden Eingängen, wie vom eingangs genannten Stand der Technik, Seite 139 bekannt, die Eingangssignale $\overline{Ai}$, Bi zugeführt sind, und aus einer NOR-Verknüpfung, die das Ausgangssignal der UND-Verknüpfung mit dem Signal am Verbindungspunkt von Transfertransistor 3j und Lasttransistor 4j der nächsthöheren Stufe j NORverknüpft. Der Ausgang des Komplexgatters 2i ist mit dem Gate des Transfertransistors 3i verbunden. Die Lasttransistoren liegen an der Betriebsspannung $U_B$.

In der höchsten Stufe n − 1 entfällt der dritte Eingang des ersten NOR-Glieds, so daß das erste NOR-Glied 1' dieser Stufe nur die beiden mit den Eingangssignalen A(n − 1), B(n − 1) gespeisten Eingänge aufweist. Anstatt des Komplexgatters ist in der Stufe n − 1 ferner das NAND-Glied 2' vorgesehen, dessen beiden Eingängen dieselben Eingangssignale wie dem NOR-Glied 1' zugeführt sind. Der Ausgang des NAND-Glieds 2' ist mit dem Gate des Transfertransistors 3' verbunden, dessen eines Strompfadende mit dem Ausgang des NOR-Glieds 1' und dessen anderes Strompfadende über den Lasttransistor 4' mit der Betriebsspannung $U_B$ verbunden ist.

Die Ausgänge sämtlicher erster NOR-Glieder 10, 1i, 1j, 1' sind mit jeweils einem Eingang des Gesamt-NOR-Glieds 6 verbunden, an dessen Ausgang das Signal für A ≤ B abgenommen werden kann, während am Verbindungspunkt von Transfertransistor 30 und Lasttransistor 40 der niedersten Stufe 0 das Signal für A = B abgegriffen werden kann. Im Ausführungsbeispiel der Fig. 1 sind die Lasttransistoren 40, 4i, 4j, 4' als widerstandsgeschaltete Verarmungstyp-Transistoren gezeichnet. Dies ist nicht zwingend ; es können auch an dieser Stelle Anreicherungstyp-Transistoren verwendet werden. Der Aufbau einer Stufe aus lediglich zwei Verküpfungsgliedern, Transfertransistor und Lasttransistor ergibt im Sinne der Aufgabenlösung eine kleinflächige Zelle, wobei zu berücksichtigen ist, daß jedes der Verknüpfungsglieder auf einen Lastwiderstand arbeitet. Zusätzlich für alle Stufen ist dann noch das Gesamt-NOR-Glied vorzusehen, was den Gesamtaufwand für den erfindungsgemäßen MOS-Parallel-Komparator nur noch geringfügig erhöht.

Das Ausführungsbeispiel nach Fig. 1 arbeitet mit positiver Logik, d. h., dem positiveren Pegel H ist die logische Eins und dementsprechend dem negativeren Pegel L die logische Null zugeordnet. Für die folgende Funktionserläuterung wird zunächst vorausgesetzt, daß die zwischen den Stufen n − 1 und j sowie i und 0 gestrichelt gezeichneten Verbindungsleitungen durchverbunden sind, d. h., daß also ein vierstufiger Parallel-Komparator vorliegt. Zunächst soll die Funktion hinsichtlich der beiden Binärwort-Paare A = 1011, B = 1100 bzw. A = 0010, B = 0011 dargelegt werden.

In der höchsten Stufe n − 1 führt das invertierte A-Stellensignal (= 0) zusammen mit dem B-Stellensignal (= 1) einerseits am Ausgang des NAND-Glieds 2′ zu einem H-Pegel und andererseits am Ausgang des NOR-Glieds 1′ zu einem L-Pegel. Somit wird der Transfertransistor 3′ leitend gesteuert, und der L-Pegel liegt auch an dessen Verbindungspunkt mit dem Lasttransistor und somit an jeweils einem Eingang der ODER-Verknüpfung des Komplexgatters 2j und des ODER-Glieds 1j der nächsten Stufe j.

In der Stufe j ergibt das invertierte A-Stellensignal 1 zusammen mit dem B-Stellensignal 1 am Ausgang der UND-Verknüpfung einen H-Pegel und somit am Ausgang des Komplexgatters 2j einen L-Pegel. Andererseits ergeben diese Stellensignale zusammen mit dem vom erwähnten Verbindungspunkt stammenden L-Pegel ebenfalls einen L-Pegel am Ausgang des NOR-Glieds 1j. Da nun jedoch der Transfertransistor 3j durch den L-Pegel am Ausgang des Komplexgatters 2j nicht durchgesteuert wird, sondern gesperrt bleibt, liegt am Verbindungspunkt von Transfertransistor 3j und Lasttransistor 4j ein H-Pegel.

Dieser Verbindungspunkt-H-Pegel führt am Ausgang des Komplexgatters 2i der nächstniederen Stufe i zu einem L-Pegel, unabhängig davon, welche Stellensignale am Eingang der zugehörigen UND-Verknüpfung liegen. Dasselbe gilt für den Ausgang des NOR-Glieds 1i, an dem ebenfalls unabhängig von den an zweien seiner Eingänge liegenden Stellensignalen durch den Verbindungspunkt-H-Pegel der vorhergehenden Stufe j ein L-Pegel liegt. Damit liegt aber am Verbindungspunkt von Transfertransistor 3i und Lasttransistor 4i wieder wie in der Stufe j ein H-Pegel. Die Stufe 0 hat offensichtlich im vorliegenden Fall dieselbe Wirkungsweise wie die Stufe i, d. h., am Ausgang des Komplexgatters 20 tritt ein L-Pegel auf und am Verbindungspunkt von Transfertransistor 30 und Lasttransistor 40 ein H-Pegel. Dieser H-Pegel hat aber die Bedeutung A < B. Außerdem ist ersichtlich, daß sämtliche Ausgänge der NOR-Glieder 1′, 1j, 1i, 10 einen L-Pegel führen, so daß am Ausgang des Gesamt-NOR-Glieds 6 ein H-Pegel mit der Bedeutung A < B auftritt, quod erat demonstrandum.

Für die zweite, oben erwähnte Eingangssignalkombination A = 0010, B = 0011 ergibt sich folgende Wirkungsweise : Am Ausgang des NAND-Glieds 2′ tritt ein H-Pegel und am Ausgang des NOR-Glieds 1′ ein L-Pegel auf. Somit ist der Transfertransistor 3′ leitend gesteuert, so daß an seinem Verbindungspunkt mit dem Lasttransistor 4′ ebenfalls ein L-Pegel liegt. Dieser L-Pegel bewirkt zusammen mit dem von der UND-Verknüpfung des Komplexgatters 2j stammenden L-Pegel am Ausgang des Komplexgatters 2j einen H-Pegel und am Ausgang des NOR-Glieds 1j zusammen mit den Eingangssignalen einen L-Pegel. Dadurch wird der Transfertransistor 3j leitend gesteuert, und es liegt am Verbindungspunkt von Transfertransistor 3j und Lasttransistor 4j ein L-Pegel.

Dieser Verbindungspunkt-L-Pegel bewirkt am Ausgang des Komplexgatters 2i der nächstniederen Stufe i zusammen mit der Eingangssignalkombination am Eingang der UND-Verknüpfung einen H-Pegel und am Ausgang des NOR-Glieds 1i einen L-Pegel. Am Verbindungspunkt von Transfertransistor 3i und Lasttransistor 4i tritt daher wieder ein L-Pegel auf. Dieser führt am Ausgang des Komplexgatters 20 und am Ausgang des NOR-Glieds 10 jeweils zu einem L-Pegel, so daß am Verbindungspunkt von Transfertransistor 30 und Lasttransistor 40 ein H-Pegel auftritt, was wieder die Information bezüglich A ≠ B signalisiert. Da ferner wiederum an den Ausgängen sämtlicher NOR-Glieder 1′, 1j, 1i, 10 ein L-Pegel liegt, erscheint am Ausgang des Gesamt-NOR-Glieds 6 wieder ein H-Pegel, der die wahre Aussage für die Bedingung A < B darstellt, quod erat demonstrandum.

Wie aus der obigen Funktionserläuterung für die erwähnten zwei Beispiele ersichtlich ist, erscheint in Richtung fallender Wertigkeit in derjenigen Stufe zum ersten Mal ein H-Pegel am Verbindungspunkt von Transfer- und Lasttransistor, in der die beiden Stellensignale jeweils die Ziffer 1 aufweisen. Dieser als « Übertrag » aufzufassende H-Pegel bedingt dann in den weiteren nachgeordneten Stufen immer dann auch einen H-Pegel, wenn in allen diesen Stufen der entsprechende Transfertransistor nichtleitend gesteuert ist. Lediglich im Falle, daß bei Gleichheit in allen Stellensignalen eine 0-1-Kombination auftritt, ergibt sich am Verbindungspunkt von Transfertransistor 30 und Lasttransistor 40 der niedersten Stufe 0 ein L-Pegel, der dann die vorausgesetzte Gleichheit signalisiert.

Die eben erläuterten einzelnen Zustände an den verschiedenen Schaltungspunkten sind in der folgenden Tabelle zusammengefaßt. Als letzte Spalte sind dabei auch die entsprechenden Zustände für ein Zahlenpaar mit A > B angegeben.

(Siehe Tabelle 1 Seite 4 f.)

Tabelle 1

| | A = 1011<br>Ā = 0100<br>B = 1100 | A = 0010<br>Ā = 1101<br>B = 0011 | A = 1010<br>Ā = 0101<br>B = 1010 | A = 1111<br>Ā = 0000<br>B = 1000 |
|---|---|---|---|---|
| Ag 2' | H | H | H | H |
| Ag 1' | L | L | L | L |
| 3' | leitend | leitend | leitend | leitend |
| VBn−1 | L | L | L | L |
| Ag 2j | L | H | H | H |
| Ag 1j | L | L | L | H |
| 3j | gesperrt | leitend | leitend | leitend |
| VBj | H | L | L | H |
| Ag 2i | L | H | H | L |
| Ag 1i | L | L | L | L |
| 3i | gesperrt | leitend | leitend | gesperrt |
| VBi | H | L | L | H |
| Ag 20 | L | L | H | L |
| Ag 10 | L | L | L | L |
| 30 | gesperrt | gesperrt | leitend | gesperrt |
| VB0 | H | H | L | H |

Ag = Ausgang von ...

VB = Verbindungspunkt Transfertransistor-Lasttransistor in Stufe ...

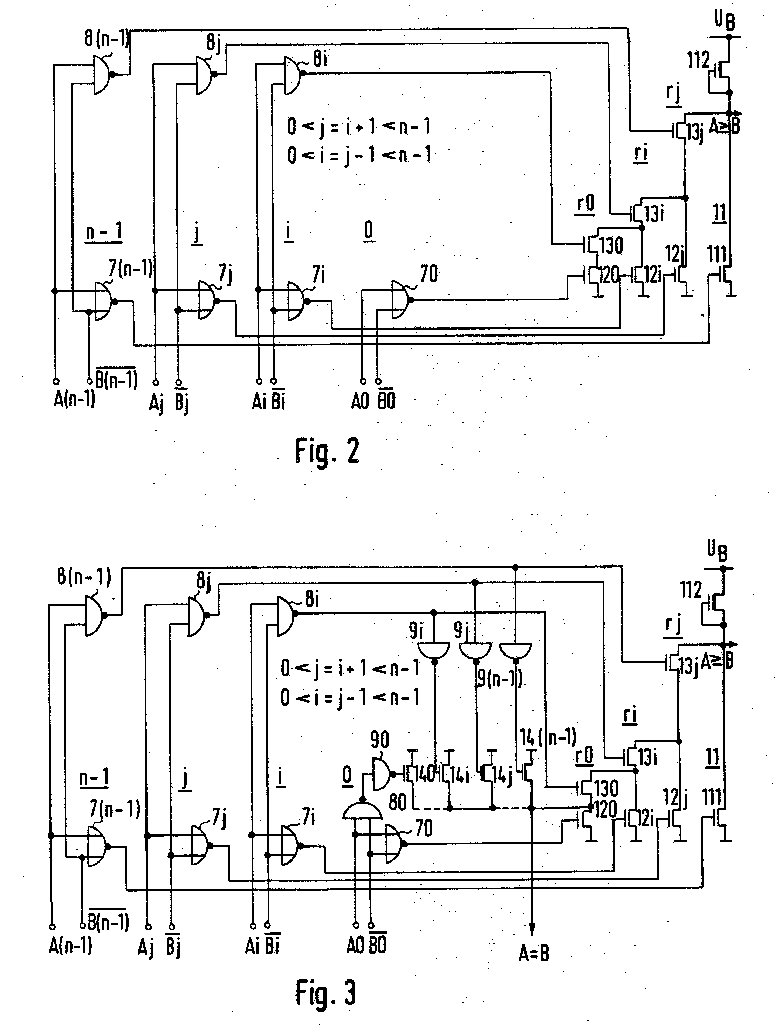

Die Fig. 2 zeigt das Schaltbild eines Ausführungsbeispiels der zweiten Lösungsvariante nach der Erfindung. Es sind wiederum vier Stufen, nämlich die Stufe 0 mit der niedersten Wertigkeit $2^0$, zwei aufeinanderfolgende Stufen i, j und die höchste Stufe n − 1 mit der Wertigkeit $2^{n-1}$, gezeigt. Jede Stufe enthält ein NOR-Glied ; in der Figur sind also die NOR-Glieder 70, 7i, 7j, 7(n − 1) gezeigt. Den jeweils zwei Eingängen dieser NOR-Glieder ist das nichtinvertierte Stellensignal A0, B̄0, Ai, B̄i, Aj, B̄j und A(n − 1), B(n − 1) zugeführt. Ferner ist der Ausgangsinverter 11 mit Schalttransistor 111 und Lasttransistor 112 vorgesehen. Dieser ist in Fig. 2 als Verarmungstyp-Transistor gezeichnet, was gewisse Vorteile bietet, jedoch nicht zwingend ist. Der Schalttransistor 111 liegt einseitig am Schaltungsnullpunkt und der Lasttransistor 112 an der Betriebsspannung $U_B$. Der Eingang des Ausgangsinverters 11, also das Gate des Schalttransistors 111, liegt am Ausgang des NOR-Glieds 7(n − 1) der höchsten Stufe n − 1. Der Ausgangsinverter-Ausgang, also der Verbindungspunkt von Schalttransistor 111 und Lasttransistor 112, erzeugt das Signal für A ≥ B, wiederum bei vorausgesetzter positiver Logik.

In den Stufen 1 bis n − 1, in Fig. 2 also in den Stufen i, j, n − 1, ist ferner jeweils das NAND-Glied 8i, 8j, 8(n − 1) vorgesehen, dessen jeweils zwei Eingängen ebenfalls die erwähnten Stellensignale zugeführt sind, d. h., diese beiden Eingänge sind jeweils mit den beiden Eingängen der NOR-Glieder 7i, 7j, 7(n − 1) verbunden.

In den Stufen 0 bis n − 2, im Ausführungsbeispiel der Fig. 2 also in den Stufen 0, i, j, ist ferner die einseitig am Schaltungsnullpunkt liegende Reihenschaltung r0, ri, rj der Source-Drain-Strecken der jeweiligen beiden Transistoren 120, 130 ; 12i, 13i ; 12j, 13j vorgesehen. Das Gate des jeweiligen am Schaltungsnullpunkt liegenden Transistors, des hier sogenannten unteren Transistors 120, 12i, 12j, liegt dabei am Ausgang des jeweiligen NOR-Glieds 70, 7i, 7j der jeweiligen Stufe 0, i, j und das Gate des jeweiligen nicht am Schaltungsnullpunkt liegenden Transistors, des hier sogenannten oberen Transistors 130, 13i, 13j, am Ausgang des jeweiligen NAND-Glieds 8i, 8j, 8(n − 1) der nächsthöheren Stufe i, j, n − 1.

Das schaltungsnullpunktabgewandte Ende der Reihenschaltungen r0, ri, rj liegt dabei jeweils am Verbindungspunkt von oberem und unterem Transistor der nächsthöheren Reihenschaltung ri, rj, wobei als zur höchsten Stufe gehörende Reihenschaltung der Ausgangsinverter 11 aufzufassen ist. Das schaltungsnullpunktabgewandte Ende der Reihenschaltung rj liegt also am Ausgang des Ausgangsinverters 11.

4

Das Ausführungsbeispiel nach Fig. 2 kann in allen denjenigen Fällen verwendet werden, in denen lediglich eine Aussage über das Größersein und die Gleichheit von A bezüglich B benötigt wird, welche Aussage gleichbedeutend ist mit der Aussage $B \leqslant A$. In positiver Logik bedeutet also ein H-Pegel am Ausgangsinverter-Ausgang die Aussage $A \geqslant B$ und ein L-Pegel die Aussage $A < B$.

In Fig. 3 ist eine Weiterbildung der Anordnung nach Fig. 2 für solche Anwendungsfälle gezeigt, bei denen eine eindeutige Aussage $A > B$ erforderlich ist. Mit den gegenüber dem Schaltbild von Fig. 2 zusätzlichen Schaltungsteilen in Fig. 3 wird eine Aussage über $A = B$ ermöglicht, so daß aus dem H-Pegel für $A \geqslant B$ und dem L-Pegel für $A \neq B$ sich die Aussage $A > B$ ergibt. Im Ausführungsbeispiel nach Fig. 3 ist in jeder Stufe $0, i, j, n - 1$ der Inverter $90, 9i, 9j, 9(n - 1)$ vorgesehen sowie der mit der Source-Elektrode am Schaltungsnullpunkt liegende Transistor $140, 14i, 14j, 14(n - 1)$. Der jeweilige Invertereingang liegt dabei am Ausgang des NAND-Glieds der zugehörigen Stufe. Ferner ist auch in der niedersten Stufe 0 das den NAND-Gliedern in den restlichen Stufen entsprechende NAND-Glied 80 vorgesehen, dessen Ausgang mit dem Eingang des Inverters 90 verbunden ist.

Die Drain-Elektroden der Transistoren $140, 14i, 14j, 14(n - 1)$ liegen gemeinsam am Verbindungspunkt von oberem und unterem Transistor $120, 130$ der niedersten Stufe 0, und an diesem Punkt kann das erwähnte Signal für $A = B$ abgenommen werden.

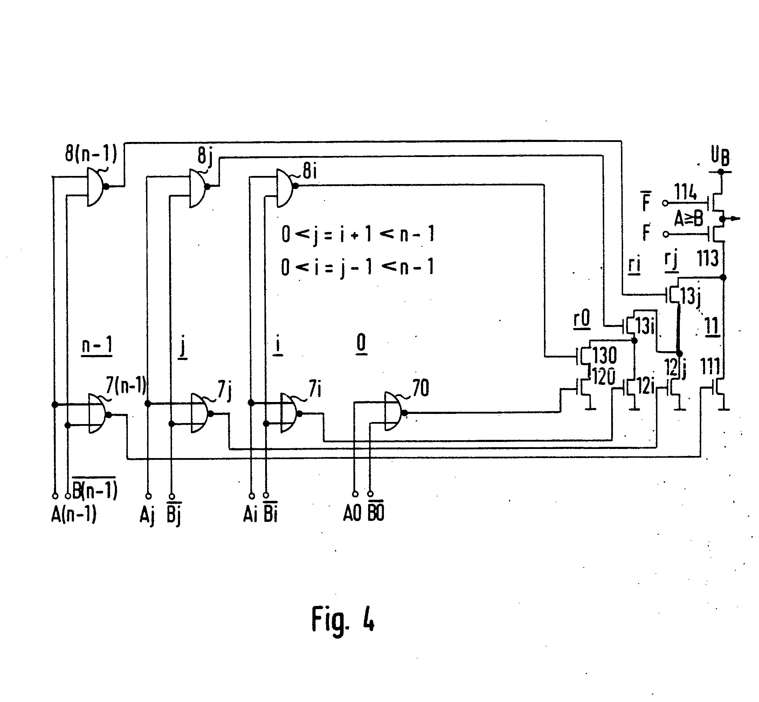

In Fig. 4 ist schließlich noch eine Abwandlung der Anordnung nach Fig. 2 gezeigt, die auch bei der Weiterbildung nach Fig. 3 angewandt werden kann. Der Lasttransistor 112 nach den Fig. 2 und 3 ist dabei durch die Reihenschaltung zweier getakteter Transistoren 113, 114 ersetzt, an deren Gates die zueinander inversen Taktsignale $F, \overline{F}$ liegen, während der Ausgang am Verbindungspunkt dieser beiden in Serie geschalteten Transistoren 113, 114 liegt. Bei dieser Schaltungsvariante kann das Ausgangssignal nur während der Taktphase F abgefragt werden.

Für die Funktionsweise der Anordnungen nach den Fig. 2 und 3 wird auf die Tabelle 2 verwiesen, wobei wiederum wie bei der Anordnung nach Fig. 1 positive Logik vorausgesetzt ist.

(Siehe Tabelle 2 Seite 6 f.)

Tabelle 2

| | A = 1011<br>B = 1100<br>$\bar{B}$ = 0011 | A = 0010<br>B = 0011<br>$\bar{B}$ = 1100 | A = 1010<br>B = 1010<br>$\bar{B}$ = 0101 | A = 1111<br>B = 1000<br>$\bar{B}$ = 0111 |
|---|---|---|---|---|
| Ag 8 (n−1) | H | H | H | H |
| Ag 7 (n−1) | L | L | L | L |
| 13j | leitend | leitend | leitend | leitend |
| Ag 8j | H | H | H | L |
| Ag 7j | H | L | L | L |
| 12j | leitend | gesperrt | gesperrt | gesperrt |
| 13i | leitend | leitend | leitend | gesperrt |
| VB rj | L | L | H | H |
| Ag 8i | L | H | H | L |
| A 7i | L | L | L | L |
| 130 | gesperrt | leitend | leitend | gesperrt |
| 12i | gesperrt | gesperrt | gesperrt | gesperrt |
| VB ri | L | L | H | undefiniert |
| Ag 70 | L | H | L | L |
| 120 | gesperrt | leitend | gesperrt | gesperrt |
| VB r0 | L* | L | H | L* |
| VB 11<br>(A ⋗ B) | L | L | H | H |
| Ag 80 | L | H | H | L |
| 140 | leitend | gesperrt | gesperrt | leitend |
| 14i | leitend | gesperrt | gesperrt | leitend |
| 14j | gesperrt | gesperrt | gesperrt | leitend |
| 14 (n−1) | gesperrt | gesperrt | gesperrt | gesperrt |
| VB 120<br>(A = B) | L | L | H | L |

Ag ... = Ausgang von ... * in Fig. 3 ; sonst undefiniert

VB ... = Verbindungspunkt der in Serie geschalteten Transistoren in der Reihenschaltung ...

In den Figuren ist die Darstellung mittels der Schaltsymbole für Verknüpfungsglieder so gewählt, daß nur solche Verknüpfungsglieder einen Arbeitswiderstand aufweisen, deren Ausgangsleitung am Berührungspunkt mit dem Halbkreis des Verknüpfungssymbols den zur Darstellung einer Invertierung üblichen Punkt aufweisen. Aus diesem Grund wurde auch zwischen einem Verknüpfungsglied, das eine derartige Schaltung mit einem Arbeitswiderstand ist, und einer Verknüpfung als solcher unterschieden, die lediglich Teil eines Verknüpfungsglieds ist.

Das Gesamt-NOR-Glied 6 nach Fig. 1 und Anspruch 1 kann im Falle, daß der Komparator nur auf Gleichheit vergleichen soll, entfallen.

**Ansprüche**

1. Monolithisch mittels Isolierschicht-Feldeffekttransistoren gleicher Leitungsart (N- oder P-Kanal) vom Anreicherungstyp integrierter digitaler Parallel-Komparator für ein erstes n-stelliges Binärwort (A) und ein zweites n-stelliges Binärwort (B) (binärer MOS-Parallel-Komparator), wobei in jeder Stufe das

inverse Stellensignal ($\overline{Ai}$) des ersten Binärworts (A) und das Stellensignal (Bi) des zweiten Binärworts (B) als Eingangssignale einer UND-Verknüpfung dienen,
gekennzeichnet durch folgende Merkmale je Stufe (i) :
— ein erstes NOR-Glied (1i) mit drei Eingängen, von denen der erste und der zweite mit den Eingangssignalen ($\overline{Ai}$, Bi) gespeist sind,
— ein Transfertransistor (3i) liegt mit einem Lasttransistor (4i) in Reihe zwischen dem Ausgang des ersten NOR-Glieds (1i) und der Betriebsspannungsquelle ($U_B$),
— ein Komplexgatter (2i) besteht aus der UND-Verknüpfung und einer NOR-Verknüpfung, und sein Ausgang liegt am Gate des Transfertransistors (3i),
— der erste Eingang der NOR-Verknüpfung ist mit dem Ausgang der UND-Verknüpfung und der zweite Eingang der NOR-Verknüpfung mit dem Verbindungspunkt von Transfertransistor (3j) und Lasttransistor (4j) der nächsthöheren Stufe (j) verbunden, an dem auch der dritte Eingang des NOR-Glieds (1i) liegt,
ferner gekennzeichnet durch folgende Merkmale :
— der dritte Eingang des NOR-Glieds (1') der höchsten Stufe (n − 1) entfällt,
— das Gate des Transfertransistors (3') der höchsten Stufe (n − 1) liegt am Ausgang eines von den Eingangssignalen ($\overline{A(n-1)}$, B(n − 1)) gesteuerten NAND-Glieds (2'),
— ein Gesamt-NOR-Glied (6) mit n Eingängen, die jeweils am Ausgang aller NOR-Glieder (10, 1i, 1j, 1') liegen und an dessen Ausgang das Signal für A ⩽ B abzunehmen ist, und
— am Verbindungspunkt des Transfertransistors (30) mit dem Lasttransistor (40) der niedersten Stufe (0) ist das Signal für $\overline{A = B}$ entsprechend A ≠ B abzunehmen.

2. Monolithisch mittels Isolierschicht-Feldeffekttransistoren gleicher Leitungsart (N- oder P-Kanal) vom Anreicherungstyp integrierter digitaler Parallel-Komparator für ein erstes n-stelliges Binärwort (A) und ein zweites n-stelliges Binärwort (B) (binärer MOS-Parallel-Komparator), wobei in jeder Stufe das Stellensignal (Ai) des ersten Binärworts (A) und das inverse Stellensignal ($\overline{Bi}$) des zweiten Binärworts (B) als Eingangssignale eines NAND-Glieds dienen,
gekennzeichnet durch folgende Merkmale :
— ein NOR-Glied (7i) je Stufe, dessen beiden Eingängen die Eingangssignale (Ai, $\overline{Bi}$) zugeführt sind,
— einen Ausgangsinverter (11), dessen Eingang am Ausgang des NOR-Glieds (7(n − 1)) der höchsten Stufe (n − 1) liegt, wobei am Inverterausgang das Signal für A ⩾ B abzunehmen ist, und
— je Stufe (i) außer der höchsten (n − 1) ist eine einseitig am Schaltungsnullpunkt liegende Reihenschaltung (ri) der Source-Drain-Strecken zweier Transistoren (12i, 13i) vorgesehen, wobei das Gate des am Schaltungsnullpunkt liegenden Transistors (« unterer Transistor ») (12i) am Ausgang des NOR-Glieds (7i), das Gate des nicht am Schaltungsnullpunkt liegenden Transistors (« oberer Transistor ») (13i) am Ausgang eines NAND-Glieds (8j) der nächsthöheren Stufe (j) und das andere Ende der Reihenschaltung am Verbindungspunkt von oberem und unterem Transistor der nächsthöheren Reihenschaltung (rj) liegt und der Ausgangsinverter (11) die höchste Reihenschaltung bildet.

3. Binärer MOS-Parallel-Komparator nach Anspruch 2, dadurch gekennzeichnet, daß je Stufe (i) ein Inverter (9i) und ein mit der Source-Elektrode am Schaltungsnullpunkt liegender Transistor (14i) vorgesehen sind, wobei der Invertereingang am Ausgang des NAND-Glieds (8i) und der Inverterausgang am Gate des Transistors (14i) liegt sowie die Drain-Elektroden der Transistoren (140, 14i, 14j, 14(n − 1)) gemeinsam am Verbindungspunkt von oberem und unterem Transistor (120, 130) der niedersten Stufe (0) angeschlossen sind und daran das Signal für A = B abzunehmen ist.

4. Binärer MOS-Parallel-Komparator nach Anspruch 2 oder 3, dadurch gekennzeichnet, daß als Lastwiderstand des Ausgangsinverters (11) ein als Widerstand geschalteter Verarmungstyp-Transistor (112) oder die Serienschaltung zweier von zwei gegenphasigen Taktsignalen (F, $\overline{F}$) gesteuerter Transistoren (113, 114) vorgesehen ist, an deren Verbindungspunkt das Signal für A ⩾ B abzunehmen ist.

5. Binärer MOS-Parallel-Komparator nach Anspruch 1, dadurch gekennzeichnet, daß als Lasttransistor (4i) ein als Widerstand geschalteter Verarmungstyp-Transistor dient.

## Claims

1. Monolithic integrated digital parallel comparator using enhancement-mode insulated-gate field-effect transistors of the same conductivity type (N- or P-channel) and designed to compare a first n-digit binary word (A) with a second n-digit binary word (B) (binary MOS parallel comparator), wherein in each stage the inverse digit signal ($\overline{Ai}$) of the first binary word (A) and the digit signal (Bi) of ther second binary word (B) serve as input signals to an AND gate,
characterized by the following features in each stage (i) :
— a first NOR block (1i) having three inputs the first and second of which are fed with the input signals ($\overline{Ai}$, Bi) ;
— a transfer transistor (3i) and a load transistor (4i) are connected in series between the output of the first NOR block (1i) and the supply-voltage source ($U_B$) ;
— a complex logic-circuit block (2i) consists of the AND gate and a NOR gate, and its output is coupled to the gate of the transfer transistor (3i) ;

— the first input of the NOR gate is connected to the output of the AND gate, and the second input of the NOR gate is connected to the junction point of the transfer transistor (3j) and the load transistor (4j) of the next higher-order stage (j), to which junction point is also connected the third input of the NOR block (1i),

and further characterized by the following features :

— the third input of the NOR block (1') of the highest-order stage (n − 1) is omitted ;

— the gate of the transfer transistor (3') of the highest-order stage (n − 1) is connected to the output of a NAND block (2') controlled by the input signals (A(n − 1), B(n − 1)) ;

— a common NOR block (6) having n inputs each connected to the output of one of the NOR blocks (10, 1i, 1j, 1') and whose output provides the signal for A ≤ B, and

— the signal for $\overline{A = B}$, corresponding to A ≠ B, can be taken off the junction point of the transfer transistor (30) and the load transistor (40) of the lowest-order stage (0).

2. Monolithic integrated digital parallel comparator using enhancement-mode insulated-gate field-effect transistors of the same conductivity type (N- or P-channel) and designed to compare a first n-digit binary word (A) with a second n-digit binary word (B) (binary MOS parallel comparator), wherein in each stage the digit signal (Ai) of the first binary word (A) and the inverse digit signal ($\overline{Bi}$) of the second binary word (B) serve as input signals to a NAND block, characterized by the following features :

— a NOR block (7i) per stage whose two inputs are fed with the input signals (Ai, $\overline{Bi}$) ;

— an output inverter (11) having its input connected to the output of the NOR block (7(n − 1)) of the highest-order stage (n − 1) and providing at its output the signal for A ≥ B, and

— each stage (i) except the highest-order stage (n − 1) includes a series arrangement (ri) of the channels of two transistors (12i, 13i) which has one end connected to ground, the gate of the grounded transistor (« low-end transistor ») (12i) being connected to the output of the NOR block (7i), the gate of the ungrounded transistor (« high-end transistor ») (13i) being connected to the output of the NAND block (8j) of the next higher-order stage (j), and the other end of the series arrangement being connected to the junction point of the high-end and low-end transistors of the next higher-order series arrangement (rj), with the output inverter (11) representing the highest-order series arrangement.

3. A binary MOS parallel comparator as claimed in claim 2, characterized in that each stage (i) includes an inverter (9i) and a transistor (14i) having its source connected to ground, the inverter input being connected to the output of the NAND block (8i), the inverter output being coupled to the gate of the transistor (14i), and the drains of the transistors (140, 14i, 14j, 14(n − 1)) being connected in common to the junction point of the high-end and low-end transistors (120, 130) of the lowest-order stage (0), and that the signal for A = B can be taken off said junction point.

4. A binary MOS parallel comparator as claimed in claim 2 or 3, characterized in that the load of the output inverter (11) is formed by a resistance-connected depletion-mode transistor (112) or by two transistors (113, 114) in series which are controlled by two antiphase clock signals (F, $\overline{F}$) and whose junction point provides the signal for A ≥ B.

5. A binary MOS parallel comparator as claimed in claim 1, characterized in that the load transistor (4i) is a resistance-connected depletion-mode transistor.

**Revendications**

1. Comparateur numérique parallèle monolithique intégré employant des transistors à effet de champ à grille isolée qui sont d'un même type de conduction (canal N ou canal P) et du type à enrichissement, pour comparer un premier mot binaire (A) à n chiffres et un deuxième mot binaire (B) à n chiffres (« comparateur binaire parallèle MOS »), dans chaque étage duquel le signal de chiffre inversé ($\overline{Ai}$) du premier mot binaire (A) et le signal de chiffre (Bi) du deuxième mot binaire (B) servent de signaux d'entrée d'une porte ET, caractérisé par les dispositions suivantes dans chaque étage (i) :

— un premier élément NOR (1i) ayant trois entrées, dont la première et la deuxième sont commandées par les signaux d'entrée ($\overline{Ai}$, Bi),

— un transistor de transfert (3i) connecté, en série avec un transistor de charge (4i), entre la sortie du premier élément NOR (1i) et la source de tension de fonctionnement ($U_B$) ;

— une porte composite (2i) constituée de la combinaison ET et d'une combinaison NOR, et dont la sortie est connectée à la grille du transistor de transfert (3i),

— la première entrée de la combinaison NOR est reliée à la sortie de la combinaison ET, et la deuxième entrée de la combinaison NOR est reliée au point de connexion du transistor de transfert (3j) au transistor de charge (4j) de l'étage (j) de rang immédiatement supérieur, auquel la troisième entrée de l'élément NOR (1i) est aussi connectée,

en outre caractérisé par les dispositions suivantes :

— la troisième entrée de l'élément NOR (1') de l'étage de plus haut rang (n − 1) est omise,

— la grille du transistor de transfert (3') de l'étage (n − 1) de plus haut rang est connectée à la sortie d'un élément NAND 2' commandé par les signaux d'entrée ($\overline{A(n − 1)}$, B(N − 1)),

— un élément NOR global (6) possède n entrées auxquelles sont appliquées toutes les sorties des éléments NOR (10, 1i, 1j, 1'), et possède une sortie à laquelle le signal pour A ≤ B peut être prélevé, et

— le signal pour A̅ = B correspondant à A ≠ B, peut être prélevé au point de connexion du transistor de transfert (30) au transistor de charge (40) de l'étage (0) du rang le plus bas.

2. Comparateur numérique parallèle monolithique intégré employant des transistors à effet de champ à grille isolée, ces transistors ayant un même type de conduction (canal N ou canal P) et étant du type à enrichissement, pour comparer un premier mot binaire (A) à n chiffres et un deuxième mot binaire (B) à n chiffres (comparateur binaire parallèle MOS), dans chaque étage duquel le signal de chiffre (Ai) du premier mot binaire (A) et l'inverse (B̅i) du signal de chiffre du deuxième mot binaire (B) servent de signaux d'entrée d'un élément NAND, caractérisé par les dispositions suivantes :

— un élément NOR (7i) dans chaque étage, les signaux d'entrée (Ai, B̅i) étant appliqués aux deux entrées de cet élément,

— un inverseur de sortie (11) dont l'entrée est connectée à la sortie de l'élément NOR (7(n − 1)) de l'étage de plus haut rang (n − 1), le signal pour A ≥ B étant prélevé à la sortie de cet inverseur, et

— chaque étage (i), à l'exception de celui de plus haut rang (N − 1), comporte un circuit série (ri) formé des trajets source-drain de deux transistors (12i, 13i) et connecté au point zéro du circuit, la grille du transistor connecté à ce point zéro (« transistor inférieur ») (12i) étant connectée à la sortie d'un élement NOR (7i), la grille du transistor non connecté au point zéro (« transistor supérieur ») (13i) étant connectée à la sortie d'un élément NAND (8j) de l'étage (j) de rang immédiatement supérieur, l'autre extrémité dudit circuit série étant appliquée au point de connexion entre transistor supérieur et transistor inférieur du circuit série (rj) de rang immédiatement supérieur, et l'inverseur de sortie (11) constituant le circuit série de plus haut rang.

3. Comparateur binaire parallèle MOS selon la revendication 2, caractérisé en ce que, pour chaque étage (i), il est prévu un inverseur (9i) et un transistor (14i) connecté au point zéro du circuit par son électrode de source, l'entrée de l'inverseur étant connectée à la sortie de l'élément NAND (8i) et la sortie de l'inverseur à la grille du transistor (14i), et les électrodes de drain des transistors (140, 14i, 14j, 14(n − 1)) étant raccordées ensemble au point de connexion du transistor supérieur au transistor inférieur (120, 130) de l'étage (0) de plus bas rang, le signal pour A = B pouvant être prélevé en ce point de connexion.

4. Comparateur binaire parallèle MOS selon la revendication 2 ou 3, caractérisé en ce qu'il est prévu, comme résistance de charge de l'inverseur de sortie (11), un transistor du type à appauvrissement (112) monté en résistance, ou un circuit série constitué de deux transistors (113, 114) commandés par des signaux d'horloge complémentaires (F, F̅), le signal pour A ≥ B pouvant être prélevé au point de connexion de ces deux transistors (113, 114).

5. Comparateur binaire parallèle MOS selon la revendication 1, caractérisé en ce qu'un transistor du type à appauvrissement, branché en résistance sert de transistor de charge (4i).

**Fig. 1**

$$0 < j = i + 1 < n - 1$$
$$0 < i = j - 1 < n - 1$$

Fig. 2

$$0 < j = i + 1 < n - 1$$
$$0 < i = j - 1 < n - 1$$

Fig. 3

**Fig. 4**